**Europäisches Patentamt**

**European Patent Office**

**Office européen des brevets**

(19)

(11) Veröffentlichungsnummer: **0 017 724**
**A1**

(12) # EUROPÄISCHE PATENTANMELDUNG

(21) Anmeldenummer: **80100777.4**

(22) Anmeldetag: **15.02.80**

(51) Int. Cl.³: **F 16 C 15/00,** F 16 F 15/30,
F 16 C 32/04, F 03 D 9/02

(30) Priorität: **03.04.79 DE 2913349**

(71) Anmelder: **Messerschmitt-Bölkow-Blohm Gesellschaft mit beschränkter Haftung, Postfach 801109, D-8000 München 80 (DE)**

(43) Veröffentlichungstag der Anmeldung: **29.10.80**
**Patentblatt 80/22**

(84) Benannte Vertragsstaaten: **AT BE CH FR GB IT LU NL SE**

(72) Erfinder: **Weiland, Emil, Dipl.-Ing., Weidenstrasse 22, D-8011 Hohenbrunn (DE)**

(54) **Schwungrad-Energiespeicher und seine Verwendung.**

㊷ Ein Energiespeicher besteht aus einem magnetisch gelagerten, naben- und wellenlosen, ringförmigen Schwungrad (2), welches in einem, den Umrissen des Schwungrades angepaßten Behälter (1) umläuft. Die Energieübertragung vom bzw. zum Schwungrad (1) erfolgt berührungslos auf elektromagnetischem Wege.

<u>Schwungrad-Energiespeicher</u>          **BEZEICHNUNG GEÄNDERT.**
                                           **siehe Titelseite**

Die Erfindung betrifft einen Energiespeicher entsprechend
dem Gattungsbegriff des Anspruchs 1.

Die mechanische Energiespeicherung mittels Schwungrädern
ist - unvermeidlich - mit erheblichen Verlusten behaftet,
deren Ursachen insbesondere in der Lagerreibung und der
Gasreibung zu suchen sind. Will man größere Energiemengen
speichern, etwa in der Größenordnung von GWh, so müssen die
Energiespeicher in der Lage sein, Leistungen im MW-Bereich
abzugeben mit der Folge, daß die Schwungräder nicht nur
außerordentlich schnell umlaufen müssen sondern auch mit
großen Radien auszubilden sind. Die Gründe dafür resultieren aus folgendem:

Die kinetische Energie E eines Schwungrades mit einem Trägheitsmoment $\Theta$ , das mit einer Winkelgeschwindigkeit $\omega$
rotiert, errechnet sich zu

$$E = \frac{1}{2} \Theta \omega^2 \ .$$

Mit Einführung des Trägheitsradius k und der Schwungmasse m
wird definitionsgemäß:

$$\Theta = k^2 m.$$

Daraus ergibt sich

$$E = \frac{1}{2} k^2 m \ \omega^2 \ .$$

Für Räder mit Radkränzen mit großem Radius und kleinen Radkranzdicken wird

$$k \approx R \ ,$$

wobei R der mittlere Radius des Radkranzes ist.

Damit ergibt sich für die kinetische Energie

$$E \approx \frac{1}{2} m R^2 \omega^2 = \frac{1}{2} m v^2,$$

mit v = Umfangsgeschwindigkeit.

Wenn nun ein Schwungrad auf konventionelle Weise realisiert wird, also mit Welle, Nabe und evtl. auch Speichen neben dem Radkranz ausgebildet ist, so erhält man außerordentlich große Abmessungen, also auch hohen Bauaufwand und relativ geringe Speicherfähigkeit. Zwar wird der Verlustfaktor eines Schwungrades, ganz gleich, ob dieses klein oder größer ausgebildet ist, bei Verwendung einer magnetisch gelagerten Welle gemindert, bedarf jedoch eines hohen technologischen Aufwandes und befriedigt nicht. Derartige Anordnungen sind durch die VDI-Nachrichten Nr. 36/1977, Seite 18, bekannt geworden.

Aufgabe der Erfindung ist es, eine Verbesserung für die beschriebenen Energiespeicher anzugeben.

Dazu wird bei dem eingangs genannten Energiespeicher erfindungsgemäß eine Verwendung eines Schwungrades nach dem Kennzeichen des Anspruchs 1 vorgeschlagen.

Nach der Erfindung wird also auf die Verwendung von Welle, Nabe und, entsprechend Anspruch 2, ggf. auch auf die von Speichen verzichtet so, daß das Schwungrad in einem, vorzugsweise torusförmig ausgebildeten Behälter umläuft. Da das Schwungrad und sein Behälter durch ihre torus (=ähnliche) Formgebung im Verhältnis zu ihrer Masse mit einem günstig ausgebildeten Volumen versehen sind, kann der Behälter mit wenig Pumpaufwand auch noch evakuiert werden. Dadurch ergibt sich bei niedrigem Bauaufwand, geringer Leckage und kleiner Verlustleistung eine extrem hohe Speicherfähigkeit selbst dann, wenn man nur eine Anordnung trifft, die den Merkmalen des Anspruchs 1 alleine entspricht.
Das wird insbesondere auch aus folgender Betrachtung verständlich:

Für die Beanspruchung $\sigma$ eines mit der Geschwindigkeit v frei umlaufenden Ringes gilt

$$\sigma = v^2 \rho$$

mit $\rho$ = Dichte der Schwungmasse. Wird die Umfangsgeschwindigkeit nun so gewählt, daß der Ring mit der zulässigen Spannung $\sigma_{zul}$ beansprucht wird, so ergibt sich für die maximale kinetische Energie

$$E_{max} = \frac{1}{2} m \frac{\sigma_{zul}}{\rho} \quad .$$

Für einen Ring mit einem Querschnitt F und Durchmesser D erhält man dann folgende Beziehung für die maximal gespeicherte Energie

$$E_{max} = \frac{1}{2} F \cdot D . \pi \cdot \sigma_{zul}$$

Sieht man zunächst vom Werkstoff ab, so ist also anzustreben, für ein großes Speichervolumen große Ringquerschnitte und/oder große Durchmesser vorzusehen. Da für den Ringquerschnitt sehr bald Grenzen dort gezogen sind, wo sonst sein Umfang und damit auch der des Schwungrades zu groß werden, ist es zweckmäßig, mehr noch als den Querschnitt den Durchmesser des Schwungrades zu vergrößern. Das ist aber nur dann möglich, wenn man auf das mechanische Lager und die dazu notwendigen mechanischen Ausbildungen des Schwungrades verzichtet, also auf Nabe, Welle und ggf. Speichen. Man kann dann die Schwungradmasse unmittelbar am Ort ihres Vorhandenseins, also am Umfang, durch Magnetkräfte abstützen, erspart außerdem die für Nabe, Welle und ggf. Speichen notwendige, aber zur Energiespeicherung nahezu nichts beitragenden Massen (Kleiner Durchmesser D!). Außerdem werden die Lagerverluste dadurch praktisch aufgehoben.

Bildet man ein derartiges Schwungrad im wesentlichen ringförmig aus, also so, daß es in einem torusförmigen Behälter umlaufen kann, und evakuiert man diesen, so werden die Gasreibungsverluste ebenfalls eliminiert. Man kann dann davon ausgehen, daß ein derartig ausgebildeter Energiespeicher eine Speicherfähigkeit von Tagen besitzt.

Die Energieübertragung erfolgt in Weiterbildung der Erfindung zweckmäßigerweise auf elektrisch-/induktivem Wege, beispielsweise mittels eines Linearmotors/-generators. Dabei können die der magnetischen Lagerung und ggf. auch Zentrierung des Schwungrades dienenden Bauteile zusammen mit denen der induktiven Energieübertragung dienenden zu einer baulichen Einheit zusammengefaßt sein. Eine besonders kompakte Bauweise wird damit ermöglicht.

Zur Festigkeitserhöhung und damit möglichen Beherrschung von besonders großen Kräften wird, ebenfalls in Weiterbildung der Erfindung, vorgeschlagen, die tragende Struktur des Schwungrades aus Faser-Verbund-Werkstoffen (FVW) auszubilden, beispielsweise Glasfaser-Kunststoffen resp. Kohlefaser-Kunststoffen.

Die der Lagerung und/oder Zentrierung des Schwungrades dienenden Magnetkräfte können entweder von Permanent-Magneten aufgebracht werden, aber auch von Elektro-Magneten, die nach dem Anziehungsprinzip (elektromagnetisch) oder nach dem Abstoßungsprinzip (elektrodynamisch) ausgebildet sind. In letzterem Fall ist zu beachten, daß ausreichende Magnetkräfte erst bei einer diskreten Umfangsgeschwindigkeit vorliegen; man muß dann zusätzlich mechanisch wirkende Mittel für den Anlauf vorsehen, beispielsweise Räder oder Rollen.

Die Erfindung sowie Weiterbildungen derselben werden an einem Beispiel anhand der Zeichnung beschrieben. In ihr zeigt

Fig. 1 die Draufsicht auf einen Energiespeicher, in Prinzipdarstellung, mit aufgeschnittenem Behälter,

Fig. 2 einen Teilschnitt durch Fig. 1, jedoch mit nicht aufgeschnittenem Behälter und

Fig. 3 in anderem Maßstab und anderer Ausbildung eine Teilansicht des aufgeschnittenen Behälters mit Schwungrad.

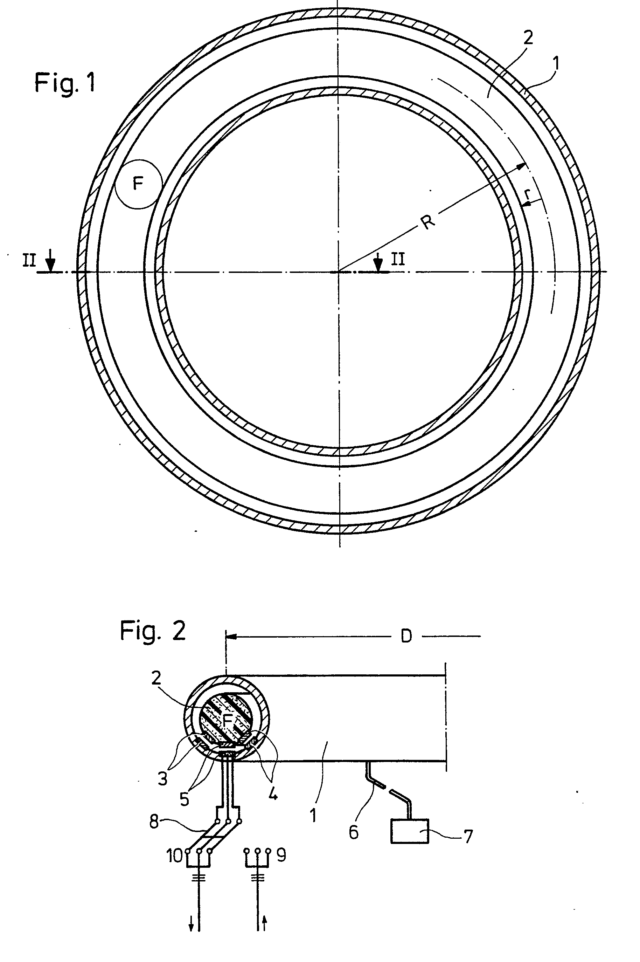

Der in Fig. 1, 2 dargestellte Energiespeicher besteht aus einem torusförmigen Behälter 1, in welchem das Schwungrad 2 umlaufen kann. Gelagert ist das Schwungrad über nur in Fig. 2 dargestellte Magnetanordnungen 3 und 4, die auch gleichzeitig der Zentrierung dienen. Der Vortrieb erfolgt mittels eines Linearmotors 5, über welchen die zugeführte elektrische Energie auf die Schwungmasse (Schwungrad 2) übertragen und so in mechanische gewandelt wird. Ist das Schwungrad 2 hochgefahren, so wird der Linearmotor 5 abgeschaltet, das Schwungrad 2 läuft weiter und die gespeicherte Energie bleibt über längere Zeit erhalten.

Da der Behälter 1 über die Leitung 6 und über eine angeschlossene Vakuumpumpe 7 evakuierbar ist, treten keine Gasreibungsverluste auf.

Die zugeführte Energie kann z. B. aus Windkraftgeneratoren stammen, die wegen der zeitlich und kraftmäßig sehr unterschiedlichen Windstärken nicht kontinuierlich elektrischen Strom erzeugen können. Man ist deshalb bestrebt, bei übergroß anfallender Energie diese zu speichern.

Die gespeicherte Energie wird dann bei geringeren Windstärken vom Speicher in das elektrische Netz zurückgespeist. Im Falle der Anwendung der vorliegenden Erfindung in Zusammenhang mit Windkraftgeneratoren würde also die vom nicht dargestellten Windkraftgenerator gelieferte und im Schwungrad 2 gespeicherte Energie über den bei der Einspeisung als Linearmotor 5 wirkenden, nunmehrigen Lineargenerator 5 an das elektrische Netz abgegeben, wozu der Schalter 8 von der Einspeiseseite 9 auf die – wie gezeichnet – Netzseite 10 umzuschalten ist.

Windkraftgeneratoren der angegebenen Art können ggf. auf etwa 100 m hohen Masten angebracht werden, wobei man als Standort Küstengebiete wegen der dort größeren Windhäufigkeit und -stärken vorziehen wird. Die entsprechenden Energiespeicher können dann um derartige Windkraftgeneratoren herum angelegt werden, wodurch Platz gespart, das Fernhalten von betriebsfremden Personen erleichtert wird. Die Durchmesser der Energiespeicher können dann ebenfalls mehrere 100 m, bei Ringquerschnitten von 1 m$^2$ und mehr betragen. In diesem Fall ist es ohne weiteres möglich, daß daß Schwungrad gespeicherte Energiemengen von 100 MW und mehr abgibt.

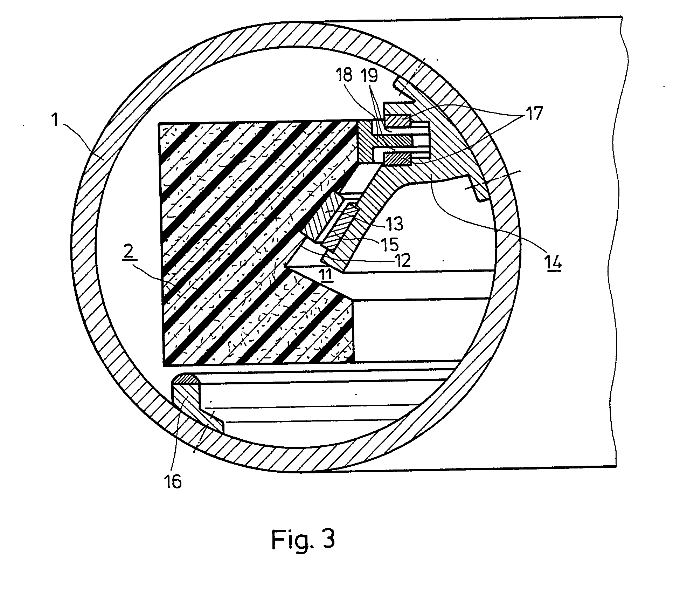

Die in Fig. 3 dargestellte abgewandelte Schwungradausbildung eines Energiespeichers nach der Erfindung läßt die Kompaktbauweise der elektrischen bzw. magnetischen Bauteile gut erkennen. Das Schwungrad 2 besteht aus FVW und hat in seiner im Querschnitt zunächst rechteckigen Ausbildung einen Einschnitt 11, an dessen einer Fläche 12 der umlaufende Teil 13 der Trag- und Zentrieranordnung angebracht ist. Ihm gegenüber befindet sich an einem im Behälter 1 befestigten Träger 14 der feststehende Teil 15 der Trag- und Zentrieranordnung. Sind beide Teile 13, 15 erregt, beispielsweise durch angelegte elektrische Spannung über ihre (nicht gesondert dargestellten) Elektromagnete, so kann sich das ringförmige Schwungrad 2 vom ringförmigen Lagerbock 16 abheben und magnetisch so schweben wie dargestellt. Gleichzeitig oder danach kann den beiden Erregerteilen 17 des Linearmotors Energie zugeführt werden so, daß der zwischen die Erregerteile 17 ragende "Stator" 18, auch Translator genannt, vom elektrischen Feld mitgenommen, das Schwungrad 2 also in Drehung versetzt wird. Nach Beendigung des Speicherungsvorganges wird der Linearmotor (Teile 17, 18) abgeschaltet. Das Schwungrad 2 läuft dann frei schwebend im evakuierten Behälter 1 verlustarm um, bis zu dem Moment, wo die in ihm gespeicherte Energie vom elektrischen Netz benötigt wird.

In diesem Fall erfolgt dann der Energiefluß in umgekehrter Richtung, also vom Schwungrad 2 über den an ihm angeordneten Stator 18, über den Luftspalt 19 zu den Erregerteilen 17 und von dort zum elektrischen Netz, ähnlich wie in Zusammenhang mit der Fig. 2 beschrieben.

Eine noch bessere Speicherfähigkeit erhält man dann, wenn man das Schwungrad aus faserverstärkten Werkstoffen, FVW, wie Glasfaser-Kunststoffen resp. Kohlefaser-Kunststoffen ausbildet. Dadurch kann in aller Regel die quadratisch eingehende Umfangsgeschwindigkeit v erhöht werden, da FVW bei geeigneter Materialwahl und Anordnung besonders
hohe Zugkräfte aufzunehmen in der Lage ist, also
Kräfte, die bei rotierenden Massen in besonderem Maße auftreten.

MESSERSCHMITT-BÖLKOW-BLOHM
GESELLSCHAFT
MIT BESCHRÄNKTER HAFTUNG,
MÜNCHEN

Ottobrunn, 02.04.79
BT01 Bittkau/ma

8495

Schwungrad-Energiespeicher

P a t e n t a n s p r ü c h e

1. Energiespeicher mit einem magnetisch gelagerten Schwungrad, g e k e n n z e i c h n e t durch Verwendung eines naben- und wellenlosen, ringförmigen Schwungrades (2),
welches in einem, den Umrissen des Schwungrades angepaßten Behälter (1) umläuft.

2. Energiespeicher nach Anspruch 1, g e k e n n z e i c h -
n e t durch Verwendung eines speichenlosen Schwungrades (2).

3. Energiespeicher nach Anspruch 1, dadurch g e k e n n -
z e i c h n e t, daß der Behälter (1) ein Torus ist.

4. Energiespeicher nach Anspruch 1, 2 oder 3 dadurch g e -
k e n n z e i c h n e t, daß der Behälter (1) evakuiert
ist.

5. Energiespeicher nach den Ansprüchen 1 bis 4, g e k e n n -
z e i c h n e t durch magnetische Zentrierung des Schwungrades (2).

- 2 -

0017724

6. Energiespeicher nach Anspruch 5 dadurch g e k e n n - z e i c h n e t, daß durch die magnetische Lagerung auch eine Zentrierung des Schwungrades (2) erfolgt.

7. Energiespeicher nach den Ansprüchen 1 bis 6, g e - k e n n z e i c h n e t durch elektrisch-induktive Energieübertragung vom bzw. zum Schwungrad (2).

8. Energiespeicher nach Anspruch 7, g e k e n n z e i c h - n e t durch Verwendung eines Wanderfeldes zur Energieübertragung.

9. Energiespeicher nach Anspruch 8, g e k e n n z e i c h - n e t durch einen Linearmotor/-generator (5) zur Energieübertragung.

10. Energiespeicher nach den Ansprüchen 1 bis 8 dadurch g e - k e n n z e i c h n e t, daß die der magnetischen Lagerung und Zentrierung und der elektrisch-induktiven Energieübertragung dienenden, am Schwungrad(2) angeordneten Bauteile zu einer baulichen Einheit zusammengefaßt sind.

11. Energiespeicher nach den Ansprüchen 1 bis 10 dadurch g e - k e n n z e i c h n e t, daß die tragende Struktur des Schwungrades aus Faser-Verbund-Werkstoffen (FVW) besteht.

12. Verwendung des Energiespeichers nach den Ansprüchen 1 bis 11, in Zusammenhang mit Windkraftgeneratoren.

- 3 -

0017724

Fig. 1

Fig. 2

Fig. 3

Europäisches Patentamt

**EUROPÄISCHER RECHERCHENBERICHT**

**0017724**

Nummer der Anmeldung

EP 80 10 0777.4

| | EINSCHLÄGIGE DOKUMENTE | | KLASSIFIKATION DER ANMELDUNG (int.Cl.3) |
|---|---|---|---|
| **Kategorie** | **Kennzeichnung des Dokuments mit Angabe, soweit erforderlich, der maßgeblichen Teile** | **betrifft Anspruch** | |
| X | DE - A1 - 2 430 141 (H. WEH) <br> * Ansprüche 1 und 3; Seite 7, Zeile 29; Fig. 2, 4, 5 * <br> -- | 1,5-8, 10 | F 16 C 15/00 <br> F 16 F 15/30 <br> F 16 C 32/04 <br> F 03 D 9/02 |
| X | DE - A1 - 2 544 261 (TELDIX) <br> * Ansprüche 1, 4, 6, 10; Fig. 1 * <br> -- | 1,3-7, 10 | |
| X | DE - A1 - 2 655 006 (BATTELLE DEVELOP-MENT) <br> * Ansprüche 1, 9; Fig. 2, 12 * <br> -- | 1,2, 5-7 | **RECHERCHIERTE SACHGEBIETE (Int. Cl.3)** |
| X | US - A - 4 077 678 (A. STUDER et al.) <br> * Ansprüche 1, 4; Fig. 1 bis 5 * <br> -- | 1,5-7, 10,11 | F 03 D 9/00 <br> F 03 G 3/00 <br> F 16 C 15/00 <br> F 16 C 32/00 |
| | DE - A1 - 2 722 990 (MASCHINENFABRIK AUGSBURG-NÜRNBERG) <br> * Anspruch 1; Fig. 1 * <br> -- | 12 | F 16 C 39/00 <br> F 26 F 15/00 |
| | US - A - 4 035 658 (E. DIGGS) <br> * Anspruch 1 * <br> -- | 12 | |
| A | US - A - 3 672 241 (W. RABENHORST) <br> * gesamtes Dokument * <br> -- | | **KATEGORIE DER GENANNTEN DOKUMENTE** |
| A,D | VDI-NACHRICHTEN, Band 36, <br> 9. September 1977, Düsseldorf <br> G. HANSELMANN et al. "Schwungrad-Energiespeicher für Straßenfahrzeuge" <br> Seite 18 <br> * Seite 18 * ____ | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Berlin | 16-06-1980 | MASSALSKI |

EPA form 1503.1 06.78